## Europäisches Patentamt

(19) **European Patent Office**

**Office européen des brevets**

(11) Veröffentlichungsnummer: **0 151 714
B1**

(12) # EUROPÄISCHE PATENTSCHRIFT

(45) Veröffentlichungstag der Patentschrift:
03.05.89

(21) Anmeldenummer: **84114420.7**

(22) Anmeldetag: **28.11.84**

(51) Int. Cl.⁴: **G 07 F 7/10, G 06 F 1/00**

(54) Vorrichtung zur Sicherung geheimer Informationen.

(30) Priorität: **29.12.83 DE 3347483**

(43) Veröffentlichungstag der Anmeldung:
**21.08.85 Patentblatt 85/34**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**DE-A- 3 023 427**
**US-A- 3 535 560**
**US-A- 4 203 153**
**US-A- 4 381 552**
**US-A- 4 404 972**

**PATENTS ABSTRACTS OF JAPAN, Band 6, Nr. 70
(P-113)[948], 6. Mai 1982; & JP - A - 57 8827 (MITSUBISHI
DENKI K.K.) 18.01.1982**

(73) Patentinhaber: **GAO Gesellschaft für Automation und
Organisation mbH, Euckenstrasse 12,
D-8000 München 70 (DE)**

(72) Erfinder: **Kaule, Wittich, Dr. Phys., Lindacherweg 13,
D-8080 Emmering (DE)**

(74) Vertreter: **Klunker . Schmitt-Nilson . Hirsch,
Winzererstrasse 106, D-8000 München 40 (DE)**

# Beschreibung

Die Erfindung betrifft eine Vorrichtung zur Sicherung von geheimen Informationen, bestehend aus einem Gehäuse, in dem ein die geheimen Informationen enthaltendes Speichermedium vorgesehen ist sowie einem ersten Detektorelement und gegebenenfalls weiteren Detektorelementen zur Erkennung eines unbefugten Zugangs ins Innere des Gehäuses, wobei nach Ansprechen des oder der Detektorelemente die Löschung der geheimen Informationen eingeleitet wird und einer Batterie, die zumindest das oder die Detektorelemente und gegebenenfalls das Speichermedium mit Energie versorgt.

In vielen Bereichen der elektronischen Datenverarbeitung ist es notwendig, spezielle, geheime Daten vor dem Zugriff unbefugter Personen zu sichern. Zum Beispiel ist es üblich, bei der Übertragung von Informationen diese mit einem geheimen Schlüssel zu codieren, um sie vor Abhörversuchen zu schützen. Zur Sicherheit des Systems ist es jedoch notwendig, den geheimen Schlüssel gegenüber Unbefugten zugriffssicher zu speichern.

Die gleiche Problematik stellt sich auch in Ausweiskartensystemen, bei denen z.B. die Zugangsberechtigung anhand geheimer persönlicher Daten erfolgt, die in elektronischen Speichern gespeichert sind. Diese Daten und die bei Verschlüsselungsverfahren verwendeten Schlüssel müssen ebenso zugriffssicher gespeichert werden.

Aus der DE-PS 2 224 937 ist eine derartige Vorrichtung zur Sicherung von Speicherinhalten bekannt. Der mit den geheimen Informationen bestückte Speicher wird dabei in eine Vergussmasse eingebettet, in welcher in regelloser Verteilung die Versorgungsleitungen für den Speicher eingelagert sind. Beim Versuch die Gussmasse zu entfernen, werden die Versorgungsleitungen unterbrochen und der Speicherinhalt automatisch gelöscht.

In die Versorgungsleitungen, die eine Länge von mehreren Metern erreichen können, können jedoch Störspannungen oder Ströme induziert werden, die den zuverlässigen Betrieb des Speichers beeinträchtigen. Um derartige Fehlerquellen zu vermeiden wurde vorgeschlagen, zusätzlich ein Detektorelement einzubetten und nur dessen Versorgungsleitungen als Schutzleitungen in der genannten regellosen Verteilung in die Vergussmasse einzubetten. Bei einer Unterbrechung oder einem Kurzschluss dieser Schutzleitungen wird ausgehend vom Detektorelement über eine Verbindungsleitung dem Speicher eine Löschinformation zugeführt. Die gesamte Schutzvorrichtung wird dabei von einer in die Anordnung integrierte Batterie gespeist.

Die Betriebssicherheit der Gesamtanordnung ist somit von der Qualität und vom Ladungszustand der Batterie abhängig. Zur Sicherstellung der Funktion der Sicherungseinrichtung bzw. damit die Funktion nicht durch alte oder verbrauchte Batterien beeinträchtigt wird, ist es daher notwendig, die Batterie in bestimmten Abständen auszutauschen. Der Austausch der Batterie ist jedoch meist mit einem Löschvorgang des Speicherinhalts verbunden, so dass die geheimen Informationen anschliessend wieder unter den entsprechend aufwendigen Sicherheitsanforderungen eingespeichert werden müssen.

Die Zeiträume zwischen den Wartungsphasen werden umso kürzer, je komplexer die Sicherungsvorkehrungen sind, da aufwendigere Sicherungen in der Regel entsprechend mehr Energie verbrauchen.

Die bekannte Vorrichtung ist folglich auf die Anwendungsfälle beschränkt, in denen entweder nur relativ einfache Detektorelemente zur Erkennung eines unbefugten Zugriffsversuch mit einem entsprechend geringen Stromverbrauch ausreichend sind oder die Vorrichtung nur über relativ kurze Zeiten in Betrieb ist.

Die DE-A 3 023 427 beschreibt einen als geschlossenen Behälter ausgebildeten mobilen Datenträger, der geheimzuhaltende Daten sichert. Durch eine in dem Datenträger befindliche Identifikationseinrichtung können mit extern zugeführten Identifizierungsdaten geheimzuhaltende Daten freigegeben werden. Ein Löschen oder Unbrauchbarmachen der geheimen Daten wird bei Feststellen des Versuchs eines unbefugten Eingriffs eingeleitet. Sensoren, zum Beispiel Stromdetektoren, Innendruckdetektoren oder Zerstörungsdetektoren registrieren einen Versuch, gewaltsam einzugreifen, und sie veranlassen Vorgänge zum Löschen der geheimzuhaltenden Daten. Je nach Art der Speicher bewirkt die durch die Sensoren bewirkte Registrierung entweder eine Aktivierung der Löscheinheit oder, bei flüchtigen Speichern, deren Löschung durch Unterbrechung der Stromzufuhr.

Der Erfindung liegt die Aufgabe zugrunde, eine Vorrichtung zu schaffen, durch die Betriebsdauer der Speichervorrichtung mit den Detektorelementen wesentlich erhöht werden kann, ohne dass die Sicherheit gegen unbefugten Zugriff beeinträchtigt wird.

Die Lösung dieser Aufgabe ist im Anspruch 1 angegeben.

Vorteilhafte Ausführungsformen der Erfindung sind in den abhängigen Ansprüchen angegeben.

Die erfindungsgemässe Lösung geht von der Erkenntnis aus, dass es entgegen allgemeinen Erwartungen nicht notwendig ist, die Detektorelemente permanent in Betrieb zu halten, um eine ausreichende Sicherheitswirkung zu erzielen.

Die US-A 4 203 153 beschreibt ein auf Mikroprozessor-Basis arbeitendes System, bei dem ein Mikroprozessor bei einem Netzausfall über eine Stützbatterie mit Betriebsspannung versorgt wird. Das System umfasst mehrere Sensoren, die zum Beispiel den Zustand (offen/geschlossen) von Türen, Fenstern oder dergleichen oder den Zustand von Thermostaten eines Heizsystems angeben. Bei Stromversorgung durch die Stützbatterie wird der Mikroprozessor jeweils nach Beendigung eines Arbeitszyklus abgeschaltet und nach einer vorgegebenen Zeit über einen externen Timer wieder aktiviert, d. h. wieder mit Spannung versorgt. Entgegen der vorliegenden Erfindung werden die Detektoren bei diesem Stand der Technik nicht getaktet betrieben, sondern es wird lediglich der Mikroprozessor in bestimmten Zeitintervallen mit Spannung versorgt. Ein Hinweis auf die Möglichkeit, die Detektoren oder Sensoren getaktet zu betreiben, findet sich in dieser Druckschrift nicht.

Bei der Erfindung kann durch die Taktung der Detektorelemente der Energieverbrauch der Gesamtschaltung um ein Vielfaches gesenkt werden, wodurch sich wiederum die Lebensdauer der Batterie um ein Vielfaches erhöht. Damit kann die Betriebsdauer soweit ausgedehnt werden, dass auch bei einem über längere Zeit hindurchgehenden Dauerbetrieb kein Wechsel der Batterien notwendig wird. Die erfindungsgemässe Vorrichtung zeichnet sich daher durch ihre über längere Zeiträume dauernde hohe Betriebssicherheit bei gleichzeitig hohem Sicherheitsstandard aus.

Die einzelnen Intervalle zwischen den Zeiten, in denen die Detektorelemente in Betrieb sind, sind so ausgelegt, dass ein Unbefugter sich innerhalb dieser Intervalle keinen Zugriff zu den Speicherinhalten verschaffen kann. Ruheintervalle von einer Sekunde und eine jeweilige Inbetriebsetzung für die Dauer von 10 ms sind in der Regel ausreichend, um jeden Zugriff von aussen zu unterbinden. Auf diese Weise ergibt sich eine Stromersparnis von 99% gegenüber einem Dauerbetrieb, da der mittlere Stromverbrauch der Taktschaltungen vernachlässigbar klein gehalten werden kann.

Vorzugsweise erfolgt die Inbetriebsetzung der Detektorelemente in Intervallen unterschiedlicher Länge, die wiederum statistisch verteilt sein können, wodurch die Sicherheit noch weiter erhöht wird.

In einer weiteren vorteilhaften Ausführungsform wird die Löschung des Speicherinhalts nicht direkt nach Ansprechen des in Betrieb befindlichen Detektorelements ausgelöst, sondern es werden zunächst weitere auf die Erkennung unterschiedlicher Zugriffsversuche ausgelegte Detektorelemente eingeschaltet. Wird über diese weiteren Elemente dann ein Zugriffsversuch festgestellt, so wird die Löschung des Speicherinhalts eingeleitet. Dadurch können unbeabsichtigte Löschungen beispielsweise durch Störsignale vermieden werden.

Eine Alternative oder eine zusätzliche Massnahme bietet sich darin, dass nachdem das momentan in Betrieb befindliche Detektorelement auf ein Ereignis, das auf einen Zugriffsversuch hindeutet, angesprochen hat, dieses zu einer genaueren Untersuchung veranlasst wird. Dazu kann z. B. eine genaue Auswertung der infolge des Ereignisses empfangenen Signale durchgeführt werden, um nähere Details über die Ursache der Signalauslösung zu erhalten. Anhand dieser Auswertung kann dann entschieden werden, ob die Löschung der Daten durchgeführt wird und/oder ob die weiteren Schutzschaltungen aktiviert werden sollen. Ein derartiges Vorgehen und die Aktivierung weiterer Detektorelemente kann z. B. durch einen Mikroprozessor gesteuert werden.

Um sich jederzeit gegen verschiedene Zugriffsversuche zu schützen, können die auf die Erkennung unterschiedlicher Ereignisse ausgerichteten Detektorelemente wechselweise in Betrieb gesetzt werden. Die Auswahl der jeweils einzuschaltenden Detektorelemente kann wieder in einer statistischen Reihenfolge vorgenommen werden.

Mit Hilfe der genannten Varianten wird ein umfangreicher Schutz gegenüber unbefugten Zugriffen erreicht, wobei zugleich der sichere Betrieb über längere Zeiträume garantiert wird. Durch die getaktete Inbetriebsetzung der einzelnen Schutzschaltungen wird ausserdem die Lebensdauer der Gesamtanordnung bei gleichbleibender Sicherheit um ein Vielfaches erhöht.

Ausführungsbeispiele und vorteilhafte Weiterbildungen sind nachstehend anhand der Zeichnungen näher erläutert. Die Fig. zeigen:

Fig. 1 eine schematische Darstellung einer erfindungsgemässen Vorrichtung mit einem Detektorelement,

Fig. 2 eine schematische Darstellung einer erfindungsgemässen Vorrichtung mit mehreren durch ein erstes Detektorelement auslösbaren weiteren Detektorelementen,

Fig. 3 eine schematische Darstellung einer weiteren erfindungsgemässen Vorrichtung mit mehreren Detektorelementen.

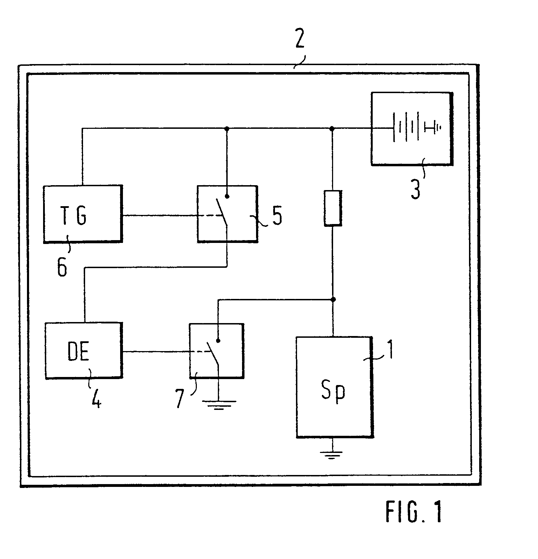

Die Fig. 1 zeigt in stark schematisierter Form ein Beispiel für eine erfindungsgemässe Vorrichtung. Der Speicher 1, der die geheimen Informationen enthält, ist mit weiteren Bauelementen in einem geschlossenen Gehäuse 2 oder in einer die gesamte Anordnung umschliessenden Gussmasse eingeschlossen. In diesem Gehäuse können neben den in den Figuren gezeigten Elementen noch weitere elektronische Bauelemente vorgesehen werden, so z. B. Mittel zum Auslesen des Speicherinhalts und/oder Komparatoren zum Vergleich des Speicherinhalts mit extern zugeführten Daten.

Eine Batterie 3 versorgt den Speicher 1 mit der notwendigen Energie zur Aufrechterhaltung der gespeicherten Daten. Über ein Detektorelement 4 und ein Schalterelement 5 kann die Versorgungsleitung für diesen Speicher auf Masse gelegt werden, wodurch der Speicherinhalt gelöscht wird. Das Detektorelement kann z. B. ein Erschütterungsmelder sein, der jeden gewaltsamen Versuch in das Gehäuse 2 einzudringen erkennt und die Löschung des Speicherinhalts veranlasst. Andere Detektorelemente sind z. B. Temperaturfühler, Mikrofone oder ein oder mehrere in die Gehäusewand integrierte oder auf die Innenseite der Gehäusewand aufgebrachte nicht leitende Folien, auf die Leiterbahnen aufgedampft oder ausgeätzt sind. In letzterem Fall wird bei einer Unterbrechung oder bei einem Kurzschluss dieser Leiterbahnen die Löschung des Speicherinhalts eingeleitet.

Aus dem Gebiet der Gehäusesicherung sind eine Vielzahl von weiteren Sicherungsmassnahmen bekannt, die entsprechend den jeweiligen Anforderungen einsetzbar sind.

Gemäss der Erfindung wird das jeweils verwendete Detektorelement immer nur kurzzeitig in bestimmten Abständen in Betrieb gesetzt. Um dies zu realisieren, ist in dem Gehäuse ein Taktgeber 6 vorgesehen, der in dem gezeigten Beispiel mittels eines Schalterelements 7 die Stromzuführung zum Detektorelement in bestimmten Abständen unterbricht.

Die Taktabstände, in denen die Stromzuführung unterbrochen wird, richten sich nach dem jeweiligen Aufbau und der Beschaffenheit des Gehäuses sowie den geforderten Sicherheitsansprüchen. Bei der Verwendung eines soliden Gehäuses genügen z.B. Taktabstände von ca. 1 sec. um jeden zwischenzeitlichen Eindringversuch zu unterbinden.

Die jeweilige «Betriebszeit» richtet sich wiederum nach der Reaktions-, Einstell-, Abklingzeit usw. des Detektorelements. In der Regel benötigt ein Detektorelement 10 ms, um eindeutig feststellen zu können, ob die vorgegebenen allgemeinen Randbedingungen eine ordnungsgemässe Handhabung der Vorrichtung vermuten lassen oder ob ein Eindringversuch stattfindet oder stattgefunden hat.

Aus dem genannten Verhältnis zwischen Taktabstand und jeweiliger Betriebsdauer ergibt sich für den Betrieb des Detektorelements beispielsweise eine Stromersparnis von 99%.

Noch höhere Werte lassen sich erzielen, wenn die Intervallzeiten des Taktbetriebs unterschiedlich sind und vorzugsweise eine statistische Verteilung aufweisen, da hier ohne Einschränkung der Sicherheit der mittlere Taktabstand sogar auf beispielsweise 3 bis 5 s und mehr erhöht werden kann.

Eine derartige statistische Verteilung der Intervallzeiten kann z.B. durch einen mit dem Taktgeber verbundenen Zufallsgenerator realisiert werden. Eine Alternative dazu wäre z.B., mehrere Taktgeber mit jeweils unterschiedlichen, aber regelmässigen Intervallängen zu überlagern, um quasistatistisch verteilte Intervallzeiten zu erhalten. Auch bei der Verwendung mehrerer Taktgeneratoren liegt der Stromverbrauch dieser Elemente, der im Mittel bei 1 μA liegt, wesentlich unter dem Verbrauchswert der verschiedenen Detektorelemente, der je nach Art der Detektoren mindestens 10 μA oder mehr beträgt.

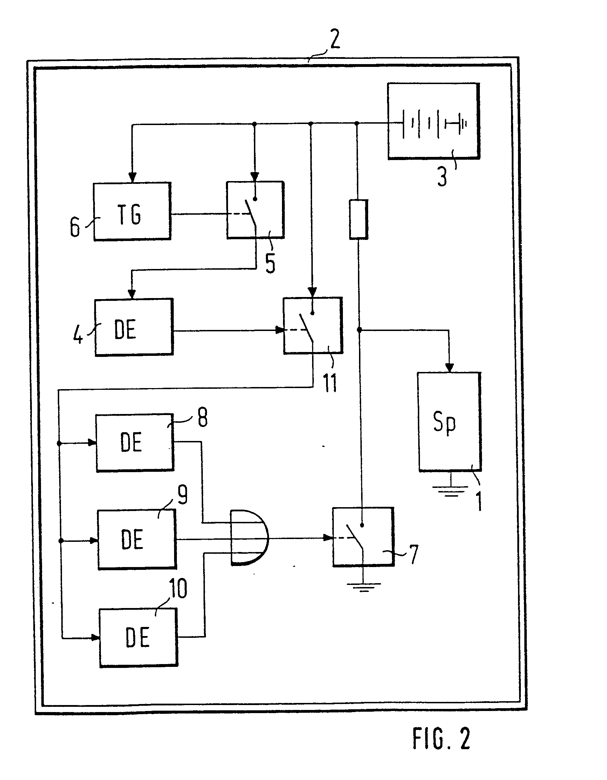

Die Fig. 2 zeigt eine Vorrichtung, in der mehrere Detektorelemente 4, 8, 9, 10 vorgesehen sind. Das Detektorelement 4, z.B. ein Erschütterungsmelder, wird in der vorbeschriebenen Form im Taktbetrieb betrieben. Dieses Element ist entsprechend empfindlich eingestellt, um bereits die geringsten Störungen zu erkennen. Spricht dieses Element auf eine äussere Störung an, so wird über ein Schaltelement 11 die Versorgungsleitung für die weiteren Detektorelemente 8–10 geschlossen, um weitere Detektoren zu aktivieren zur Überprüfung anderer Randbedingungen, z.B. die Temperatur oder das Eindringen von Licht in das Gehäuse. Führt die Auswertung zumindest eines der weiteren Detektorelemente zu dem Ergebnis, dass es sich um einen Eindringversuch handelt, wird die Löschung des Speichers veranlasst. Wie bereits erwähnt, können die weiteren Detektorelemente z.B. eine eingangs erwähnte Gehäusewandsicherung mit integrierten Schutzleitungen, ein Temperaturfühler, ein Lichtsensor o.ä. sein. Je nach Notwendigkeit der Schutzvorkehrungen kann die Palette der Detektorelemente beliebig erweitert werden. Wie in Fig. 2 vorgesehen, kann die vom Detektorelement 4 erkannte Störung einer weiteren Analyse unterzogen werden, um genauere Aussagen über die Ursache der Störung zu erhalten. Dies kann z.B. dadurch geschehen, dass der Erschütterungsmelder nicht sofort auf eine einzelne Erschütterung anspricht, sondern erst nach einer gewissen Anzahl innerhalb einer vorgegebenen Zeiteinheit, beispielsweise drei Signale innerhalb einer Minute. Zeigt die genauere Analyse, dass es sich um einen Eindringversuch handelt, wird unabhängig von den anderen Detektorelementen das Löschsignal erzeugt.

Die Detektorelemente 8, 9 und 10 werden nach einer bestimmten Zeitspanne, wenn sich die Anzeichen für einen Eindringversuch nicht bestätigt haben, wieder in Warteposition zurückgeschaltet, so dass wieder nur das Detektorelement 4 in Betrieb ist.

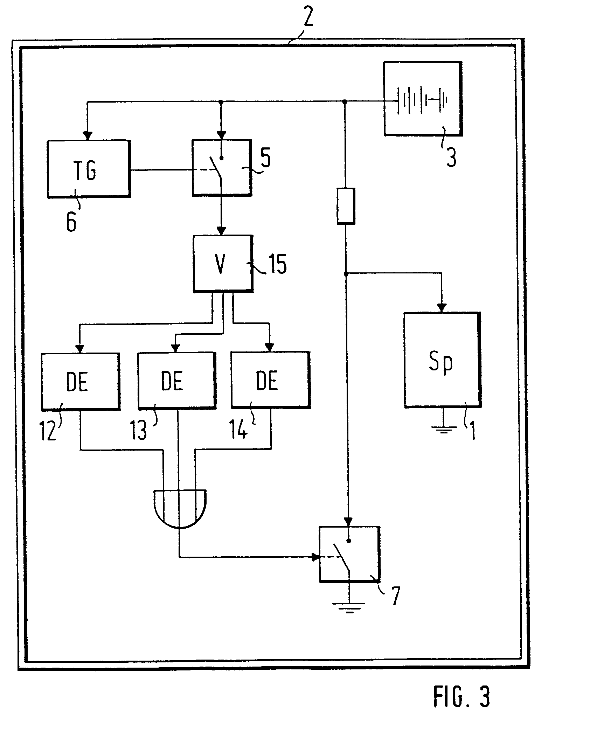

Gemäss der in der Fig. 3 gezeigten Schaltanordnung ist dem Taktgenerator 6 und den Detektorelementen 12, 13 und 14, deren Anzahl den jeweiligen Anforderungen angepasst werden kann, eine Verteilerstation 15 zwischengeschaltet. Diese Verteilerstation versorgt die einzelnen Detektorelemente wechselweise mit Energie. Bei jedem Taktimpuls vom Taktgeber oder nach einer bestimmten Anzahl wird jeweils ein anderes Detektorelement in Betrieb gesetzt. Die Auswahl, welches Detektorelement in Betrieb gesetzt wird, kann nach einer festverdrahteten Reihenfolge erfolgen oder sie wird durch einen mit der Verteilerschaltung verbundenen, – in der Fig. nicht dargestellten Zufallsgenerator bestimmt. Da die Detektorelemente naturgemäss auf die Erkennung unterschiedlicher Ergebnisse oder Signale ausgerichtet sind, wird somit ein globaler, auf die verschiedenen möglichen Ereignisse ausgerichteter Schutz erzielt, wodurch eine hohe Sicherheit bei nur geringer Belastung der Energiequellen erreicht wird.

Wie bereits früher gezeigt, kann auch hier die Löschung des Speicherinhalts so gesteuert werden, dass nach Ansprechen eines Detektorelements die weiteren Detektorelemente aktiviert werden. Das Löschsignal wird dann nach einer entsprechenden Analyse der Ergebnisse aller Detektorelemente erzeugt. Die Löschung der Speicherinhalte kann dabei nur bei Ansprechen aller Detektorelemente oder aber auch nach einer Mehrheitsentscheidung vorgenommen werden. Die unterschiedliche Gewichtung einzelner Detektoren ist dabei ebenso möglich.

Vorzugsweise sind die Detektorelemente so gesteuert, dass sie im «Normalzustand», d. h. wenn keine Störung vorliegt, ein Signal in regelmässigen Abständen an eine sogenannte «Dead Man»-Schaltung abgeben. Spricht das Detektorelement auf eine äussere Störung an, wird dieses Signal unterbrochen und daraufhin wird über die «Dead Man»-Schaltung die Löschung des Speichers eingeleitet. Diese «Dead Man»-Schaltung ist zur Koordination mit dem Taktbetrieb der Detektorelemente mit dem Taktgeber verbunden und überwacht auch die Funktion des Taktgebers. Auf diese Weise werden auch bei einem technischen Ausfall einer der Detektorelemente oder des Taktgebers ein Löschsignal erzeugt, so dass der Speicherinhalt auch in diesem Fall nicht mehr zugänglich ist.

Werden die hier beschriebenen Schutzvorkehrungen zur Sicherung der Speicherinhalte von festen, sogenannten nicht flüchtigen, Speichern verwendet, die unabhängig von einer Energiequelle arbeiten, so kann anstatt die Versorgungsleitung auf Masse zu legen ein Befehl an diesen Speicher weitergeleitet werden, mit dem der Speicherinhalt derart abgeändert wird, dass die ursprüngliche Information nicht mehr zur Verfügung steht.

Mit der erfindungsgemässen Lösung lassen sich somit Einrichtungen mit komplexen und umfangreichen Schutzvorkehrungen bei nur geringem Energieverbrauch und damit kleiner Batteriekapazität ausstatten. Durch den Taktbetrieb zumindest der Schutzvorkehrungen mit hohem Energieverbrauch kann somit eine hohe Sicherheit über einen langen Zeitraum erzielt werden, wodurch auch lange Lagerzeiten bis zum endgültigen Einsatz dieser Vorrichtungen unkritisch sind.

## Patentansprüche

1. Vorrichtung zur Sicherung von geheimen Informationen, bestehend aus einem Gehäuse (2), in dem eine die geheimen Informationen enthaltendes Speichermedium (1) vorgesehen ist sowie einem ersten Detektorelement (4) und gegebenenfalls weiteren Detektorelementen (8-10; 12-14) zur Erkennung eines unbefugten Zugangs ins Innere des Gehäuses (2), wobei nach Ansprechen des oder der Detektorelemente (4; 8-10; 12-14) die Löschung der geheimen Informationen eingeleitet wird und eine Batterie (3), die zumindest das oder die Detektorelemente und gegebenenfalls das Speichermedium (1) mit Energie versorgt, dadurch gekennzeichnet, dass das oder die Detektorelemente (4; 8-10; 12-14), die die Einhaltung vorgegebener allgemeiner Randbedingungen prüfen und damit auf eine ordnungsgemässe Handhabung der Vorrichtung schliessen lassen, mit einem Taktgeber (6) verbunden sind, der das oder die Detektorelemente (4; 8-10; 12-14) in bestimmten Zeitabständen nur kurzzeitig in Betrieb setzt, wobei die Zeitpunkte und/oder Zeitabstände, in denen die Detektorelemente (4; 8-10; 12-14) ausser Betrieb gesetzt sind, so gewählt sind, dass ein unbefugter Zugriff in das Gehäuseinnere und zu den Speicherinhalten während der Ausserbetriebzeiten einer oder mehrerer Detektorelemente (4; 8-10; 12-14) weitgehendst ausgeschlossen ist.

2. Vorrichtung nach Anspruch 1, dadurch gekennzeichnet, dass Mittel vorgesehen sind, die die Zeitabstände gemäss einer statistischen Verteilung variieren.

3. Vorrichtung nach Anspruch 1 oder 2, dadurch gekennzeichnet, dass bei mehreren Detektorelementen (4; 8-10) jeweils nur eines in bestimmten Zeitabständen durch den Taktgeber (6) in Betrieb gesetzt wird und dass ein Schalterelement (11) vorgesehen ist, das bei Vorliegen unvorschriftsmässiger Randbedingungen, die auf einen unbefugten Zugriffsversuch schliessen lassen, die weiteren Detektorelemente (8-10) aktiviert.

4. Vorrichtung nach Anspruch 1 oder 2, dadurch gekennzeichnet, dass mehrere Detektorelemente (12-14) und eine Verteilerschaltung (15) vorgesehen sind, wobei letztere die einzelnen Detektorelemente (12-14) in bestimmten Zeitabständen wechselweise in Betrieb setzt.

5. Vorrichtung nach Anspruch 4, dadurch gekennzeichnet, dass ein Zufallsgenerator vorgesehen ist, mit Hilfe dessen die Auswahl des in Betrieb zu setzenden Detektorelements erfolgt.

6. Vorrichtung nach Anspruch 4 oder 5, dadurch gekennzeichnet, dass ein Schalterelement vorgesehen ist, das bei Ansprechen des momentan in Betrieb befindlichen Detektorelements die weiteren Detektorelemente aktiviert.

7. Vorrichtung nach einem oder mehreren der vorhergehenden Ansprüche, dadurch gekennzeichnet, dass Mittel zur Analyse der ein Ansprechen der Detektorelemente (4; 8-10; 12-15) hervorrufenden Signale vorgesehen sind.

8. Vorrichtung nach einem oder mehreren der Ansprüche 3 bis 7, dadurch gekennzeichnet, dass ein Schaltungselement vorgesehen ist, das zur Entscheidung, ob eine Löschung des Speichers (1) notwendig ist, die Signale mehrerer Detektorelemente miteinander verknüpft.

9. Vorrichtung nach Anspruch 8, dadurch gekennzeichnet, dass das Schaltungselement die Löschung des Speichers erst nach Ansprechen aller Detektorelemente einleitet.

10. Vorrichtung nach Anspruch 8, dadurch gekennzeichnet, dass das Schaltungselement die Entscheidung, ob eine Löschung notwendig ist, nach einer Mehrheitsentscheidung trifft.

11. Vorrichtung nach Anspruch 8, dadurch gekennzeichnet, dass das Schaltungselement zur Bestimmung der Löschentscheidung die einzelnen Detektorelemente nach einer unterschiedlichen Gewichtung beurteilt.

## Claims

1. Device for protecting secret information, consisting of a casing (2), in which a memory medium (1) containing secret information is provided, as well as a first detector element (4) and optionally other detector elements (8-10; 12-14) to identify unauthorised access into the inside of the casing (2) whereby after the detector element(s) (4; 8-10; 12-14) has (have) been actuated, the secret information is erased and a battery (3) which supplies at least the detector element(s) and optionally the memory medium (1) with energy, characterised in that the detector element(s) (4; 8-10; 12-14) which test whether the specified general boundary conditions are maintained and thereby indicate that the device has not been improperly handled, is/are attached to a impulse generator (6) which puts the detector element(s) (4; 8-10; 12-14) only temporarily into operation at determined intervals of time whereby the times and/or time intervals at which the detector elements (4; 8-10; 12-14) are not in operation are selected in such a way that unauthorised access into the inside of the casing and to the contents of the memory when one or more detector elements (4; 8-10; 12-14) is/are out of operation is substantially ruled out.

2. Device according to Claim 1, characterised in that means are provided which vary the intervals of time according to a statistical distribution.

3. Device according to Claim 1 or 2, characterised in that in the case of several detector elements (4; 8-10) in each case only one is set in operation at definite intervals of time by the impulse generator (6) and that a circuit element (11) is provided which in the case of forbidden boundary conditions indicate an unauthorised attempt to gain access which activates other detector elements (8-10).

4. Device according to Claim 1 or 2, characterised in that several detector elements (12-14) and a distributor switch (15) are provided, whereby the latter sets the individual detector elements (12-14) in operation alternately at fixed intervals of time.

5. Device according to Claim 4, characterised in that a random generator is provided, with the help of which the selection of the detector element to be put in operation results.

6. Device according to Claim 4 or 5, characterised in that a circuit element is provided which activates the other detector element when actuated by the detector element which happens to be in operation at that moment.

7. Device according to one or several of the previous Claims, characterised in that means are provided to analyse the signals causing actuation of the detector elements (4; 8-10; 12-15).

8. Device according to one or several of the Claims 3 to 7, characterised in that a circuit element is provided to decide whether it is necessary to erase the memory (1) which combines the signals from several detector elements.

9. Device according to Claim 8, characterised in that the circuit element only starts deleting memory after all detector elements have been actuated.

10. Device according to Claim 8, characterised in that the circuit element makes the decision whether it is necessary to erase after a majority decision has been made.

11. Device according to Claim 8, characterised in that the circuit element for deciding whether to delete rates the individual detector elements according to a differing evaluation.

## Revendications

1. Dispositif pour la protection ou la garantie d'informations secrètes, comportant un boîtier (2) destiné à contenir un moyen de stockage ou mémoire (1), des informations secrètes ainsi qu'un premier élément de détection (4) et, le cas échéant, plusieurs autres éléments de détection (8-10; 12-14) destinés à reconnaître un accès non autorisé au contenu du boîtier (2), dispositif dans lequel, après un signal émis par un ou des élément(s) de détection (4; 4-10; 12-14), déclenche l'effacement des informations secrètes, et comportant une batterie (3) qui alimente en énergie au moins le ou les élément(s) de détection et, le cas échéant, le moyen de stockage (1), ce dispositif étant caractérisé en ce que le ou les élément(s) de détection (4; 8-10; 12-14), qui vérifient le respect des conditions générales prédéterminées et permettent ainsi une manipulation régulière du dispositif, sont reliés à un générateur (6) de cadences, qui ne met le ou les élément(s) de détection (4; 8-10; 12-14) en service qu'à certains intervalles de temps et que pour de courts intervalles de temps, de sorte que les moments et/ou intervalles de temps, dans lesquels les éléments de détection (4; 8-10; 12-14) sont mis hors service, sont choisis de façon telle qu'un accès non autorisé à l'intérieur du boîtier et au contenu de la mémoire pendant les périodes de mise hors service d'un ou plusieurs élément(s) de détection (4; 8-10, 12-14) soit amplement exclus.

2. Dispositif selon la revendication 1, caractérisé en ce qu'il comporte des moyens pour faire varier les intervalles de temps selon une distribution statistique.

3. Dispositif selon la revendication 1 ou 2, caractérisé en ce que, dans le cas de plusieurs éléments de détection (4; 8-10) seul un élément de détection est mis en service par le générateur de cadences (6) à des intervalles de temps déterminés et qu'il est prévu un élément de commutation (11), qui lors de conditions irrégulières, permette de conclure à une tentative d'introduction non autorisée, et active les autres éléments de détection (8-10).

4. Dispositif selon la revendication 1 ou 2, caractérisé en ce qu'il comporte plusieurs éléments de détection (12-14) et un circuit de distribution (15) qui met les éléments de détection (12-14) en service en alternance et à des intervalles de temps déterminés.

5. Dispositif selon la revendication 4, caractérisé en ce qu'il comporte un générateur aléatoire à l'aide duquel est choisi l'élément de détection à mettre en service.

6. Dispositif selon la revendication 4 ou 5, caractérisé en ce qu'il comporte un élément de commutation qui active les autres éléments de détection quand l'élément de détection momentanément en fonction émet un signal.

7. Dispositif selon une ou plusieurs des revendications précédentes, caractérisé en ce qu'il comporte des moyens pour l'analyse des signaux provoquant l'émission des éléments de détection (4; 8–10; 12–15).

8. Dispositif selon l'un quelconque ou plusieurs des revendications 3 à 7, caractérisé en ce qu'il comporte un élément de commutation qui combine les signaux de plusieurs éléments de détection, afin de permettre de conclure si l'effacement de la mémoire (1) est nécessaire.

9. Dispositif selon la revendication 8, caractérisé en ce que l'élément de commutation ne déclenche l'effacement de la mémoire seulement qu'après émission du signal par tous les éléments de détection.

10. Dispositif selon la revendication 8, caractérisé en ce que l'élément de commutation ne prend la décision de l'effacement qu'après une décision majoritaire.

11. Dispositif selon la revendication 8, caractérisé en ce que l'élément de commutation permettant la détermination de la décision d'effacement évalue les éléments de détection selon une pondération différenciée.

FIG. 1

FIG. 2

FIG. 3